# EUROPEAN PATENT APPLICATION

(11) **EP 4 475 120 A1**
(43) Date of publication of application: **11.12.2024**
(21) Application number: 23777924.4
(22) Date of filing: 21.03.2023
(51) Int. Cl.: G10L 15/22

(54) **VOICE CONTROL METHOD AND ELECTRONIC DEVICE**

(30) Priority: 31.03.2022 CN 202210337770
(71) Applicant: Huawei Technologies Co., Ltd., Shenzhen, Guangdong 518129 (CN)
(72) Inventor: XIA, Li, Shenzhen, Guangdong 518129 (CN)
(74) Representative: Isarpatent
(86) International application number: PCT/CN2023/082828
(87) International publication number: WO 2023/185551

(57) **Abstract**

A voice control method, an electronic device, a chip, and a computer readable storage medium are provided. The method is applied to a target electronic device, and includes: receiving first signals measured by a plurality of electronic devices and information about position space in which the plurality of electronic devices are located (610); receiving a first instruction sent by a third electronic device in response to a voice operation of a user and a third signal measured by the third electronic device (620); determining, based on a relationship between the third signal and a first signal, first position space that the third electronic device is close to or located in (630); and sending the first instruction to a first electronic device in the first position space (640).

## Description

This application claims priority to Chinese Patent Application No. 202210337770.X, filed with the China National Intellectual Property Administration on March 31, 2022 and entitled "VOICE CONTROL METHOD AND ELECTRONIC DEVICE", which is incorporated herein by reference in its entirety.

### TECHNICAL FIELD

Embodiments of this application relate to the voice control field, and more specifically, to a voice control method and an electronic device.

### BACKGROUND

When a user has a plurality of electronic devices (such as desk lamps) of a same type or function, and the user controls an electronic device through voice, a server needs to inquire about a target electronic device that the user wants to operate, and can operate the target electronic device only after obtaining a response from the user. The entire process is complex, and the user needs to perform a plurality of rounds of sessions, reducing voice control efficiency, and deteriorating user experience.

### SUMMARY

Embodiments of this application provide a voice control method and an electronic device. In the technical solution, an intelligent device in space in which a user is located can be accurately controlled, and interaction is simple. This improves voice control efficiency and user experience.

According to a first aspect, a voice control method is provided. The method is applied to a target electronic device, and the method includes: The target electronic device receives first signals measured by a plurality of electronic devices and information about position space in which the plurality of electronic devices are located, where the plurality of electronic devices have a same function. The target electronic device receives a first instruction sent by a third electronic device and a third signal measured by the third electronic device. The target electronic device determines, based on a relationship between the third signal and a first signal, first position space that the third electronic device is close to or located in. The target electronic device sends the first instruction to a first electronic device in the first position space, where the first instruction may be used to control the first electronic device.

The first instruction may be used to control the first electronic device. For example, the first instruction may be a "turn-on" or "turn-off" instruction, or the like.

The information about position space may indicate position space in which the electronic device is located.

The target electronic device may be a cloud server, a local server, or the like. Alternatively, the target electronic device may be a mobile phone or the like.

In some embodiments, the target electronic device and the third electronic device may be a same electronic device, for example, a mobile phone of a user. Alternatively, the target electronic device may be a cloud server, an application, or the like deployed in the third electronic device.

In this embodiment of this application, the target electronic device may store the first signals measured by the plurality of electronic devices and the information about the position space in which the plurality of electronic devices are located. When receiving the first instruction and the third signal that are sent by the third electronic device, the target electronic device may determine, based on the relationship between the third signal and the first signal, the first position space that the electronic device is close to or located in, and send the first instruction to the first electronic device in the first position space. In the technical solution, the target electronic device may determine, based on a signal measured by an electronic device, position space in which the electronic device is located, and send an instruction to another electronic device in the position space. In this way, an intelligent device in position space in which the user is located can be controlled accurately through voice, and interaction is simple. This improves voice control efficiency and user experience.

With reference to the first aspect, in an implementation of the first aspect, that the target electronic device receives first signals measured by a plurality of electronic devices and position space in which the plurality of electronic devices are located includes: The target electronic device periodically receives the first signals measured by the plurality of electronic devices and/or the information about the position space in which the plurality of electronic devices are located.

In this embodiment of this application, the target electronic device may periodically receive the first signals measured by the plurality of electronic devices and/or the information about the position space in which the plurality of electronic devices are located. In this way, the target electronic device can update information about the electronic device, to better reflect a current position of the electronic device.

With reference to the first aspect, in an implementation of the first aspect, when first target position space that the third electronic device is close to or located in changes, the method further includes: The target electronic device receives a second instruction sent by the third electronic device and a fourth signal measured by the third electronic device. The target electronic device determines, based on a relationship between the fourth signal and a first signal, second position space that the third electronic device is close to or located in. The target electronic device sends the second instruction to a second electronic device in the second position space.

In this embodiment of this application, the position space that the third electronic device is close to or located in may change. For example, the user takes a mobile phone and moves from a primary bedroom to a secondary bedroom. In this case, the target electronic device may receive the second instruction sent by the electronic device and the fourth signal measured by the electronic device, determine, based on the relationship between the fourth signal and the first signal, the second position space that the electronic device is close to or located in, and sends the second instruction to the second electronic device in the second position space. In the technical solution, the target electronic device may determine, based on a signal reported by the third electronic device, position space in which the third electronic device is currently located. In this way, when the user sends a voice instruction, an electronic device in position space in which the user is currently located is accurately controlled. User experience is improved.

With reference to the first aspect, in an implementation of the first aspect, the method further includes: The target electronic device sends a first request message to the third electronic device, where the request message is used to request to control the first electronic device. The target electronic device receives a first response message sent by the third electronic device, and determines, based on the first response message, whether to send a third instruction to the first electronic device.

In this embodiment of this application, when the third electronic device is moved from the first position space to the second position space, the target electronic device may send the request message to the third electronic device, to control the first electronic device in the first position space (for example, requesting to turn off a light), and determine, based on the response message sent by the user by using the third electronic device, whether to send the third instruction (for example, a light turn-off instruction) to the first electronic device. In the technical solution, when the user leaves position space, the target electronic device may inquire of the user whether an electronic device in the position space can be controlled. This can improve an intelligence level of the target electronic device while empowering the user with decision-making authority, resulting in good user experience.

With reference to the first aspect, in an implementation of the first aspect, the method further includes: The target electronic device sends a third instruction to the first electronic device, where the third instruction is used to control the first electronic device.

In this embodiment of this application, after determining that the user moves from the first position space to the second position space or is close to the second position space, the target electronic device may directly send the third instruction to the first electronic device without inquiring with the user. This can improve an intelligence level of a smart home and improve user experience.

With reference to the first aspect, in an implementation of the first aspect, when the first electronic device is moved from the first position space to third position space, the method further includes: The target electronic device receives the third position space in which the first electronic device is located and a fifth signal measured by the first electronic device. The target electronic device receives a fourth instruction sent by the third electronic device and a sixth signal measured by the third electronic device. The target electronic device determines, based on a relationship between the sixth signal and a first signal and a relationship between the sixth signal and the fifth signal, fourth position space that the third electronic device is close to or located in. The target electronic device sends the fourth instruction to an electronic device in the fourth position space.

In this embodiment of this application, the first electronic device (for example, a desk lamp) located in the first position space may be moved to the third position space. The target electronic device may receive and store the fifth signal measured by the first electronic device in the third position space, and receive the sixth signal measured by the third electronic device (for example, a mobile phone) and the fourth instruction. After determining the fourth position space that the third electronic device is close to or located in, the target electronic device sends the fourth instruction (for example, turning on a light) to the electronic device located in the fourth position space. In the technical solution, information about the first electronic device can be updated. After a voice instruction of the user is received, position space that the user is close to or located in may be obtained through calculation, and the instruction is sent to an electronic device in the position space. This improves voice control efficiency and improves user experience.

According to a second aspect, a voice control method is provided. The method is applied to a third electronic device, and the method includes: The third electronic device sends a first instruction to a target electronic device in response to a voice operation of a user. The third electronic device measures a third signal based on the first instruction. The third electronic device sends the third signal to the target electronic device, where the third signal is used by the target electronic device to determine position space that the third electronic device is close to or located in, and the first instruction is used to control another electronic device in the position space.

In this embodiment of this application, an electronic device may send an instruction to the target electronic device in response to a voice operation of the user. The electronic device measures a third signal based on the instruction, and sends the third signal to the target electronic device, so that the target electronic device determines position space that the electronic device is close to or located in. In the technical solution, the electronic device sends the instruction and the measured signal to the target electronic device, to help the target electronic device determine the position space that the electronic device is close to or located in, and control another electronic device in the position space. This improves voice interaction efficiency and improves user experience.

With reference to the second aspect, in an implementation of the second aspect, that the third electronic device measures a third signal based on the first instruction includes: the third electronic device periodically measures the third signal based on the first instruction.

In this embodiment of this application, the third electronic device periodically measures the third signal based on the first instruction, so that when a position of the third electronic device is updated, the signal measured by the third electronic device can be updated. This helps the target electronic device accurately determine the position space that the third electronic device is close to or located in.

With reference to the second aspect, in an implementation of the second aspect, that the third electronic device sends the third signal to the target electronic device includes: The third electronic device periodically sends the third signal to the target electronic device.

In this embodiment of this application, the third electronic device may periodically send the measured third signal to the target electronic device. This helps the target electronic device accurately determine the position space that the third electronic device is close to or located in.

According to a third aspect, a voice control method is provided. The method is applied to a first electronic device, and includes: The first electronic device measures a first signal in first position space. The first electronic device sends, to a target electronic device, the first signal and position space information indicating the first position space. The first electronic device receives and executes a first instruction sent by the target electronic device.

In this embodiment of this application, the first electronic device measures the first signal in the first position space, and sends the first signal and the first position space to the target electronic device. This helps the target electronic device send the first instruction to the first electronic device when determining that position space that the third electronic device is close to or located in is the first position space. This improves voice interaction efficiency and improves user experience.

With reference to the third aspect, in an implementation of the third aspect, that the first electronic device sends, to a target electronic device, the first signal and position space information indicating the first position space includes: The first electronic device periodically sends, to the target electronic device, the first signal and/or the position space information indicating the first position space.

Optionally, the first electronic device may periodically measure the first signal.

In the technical solution, the first electronic device may periodically send the first signal and/or the position space information to the target electronic device, so that when a position of the first electronic device is updated, the signal measured by the first electronic device can be updated. This helps the target electronic device accurately determine the position space that the third electronic device is close to or located in.

According to a fourth aspect, an electronic device is provided, including a module configured to implement the voice control method according to any one of the first aspect and the possible implementations of the first aspect.

According to a fifth aspect, an electronic device is provided, including a module configured to implement the voice control method according to any one of the second aspect and the possible implementations of the second aspect.

According to a sixth aspect, an electronic device is provided, including a module configured to implement the voice control method according to any one of the second aspect and the possible implementations of the second aspect.

According to a seventh aspect, an electronic device is provided, including one or more processors and one or more memories. The one or more memories store one or more computer programs. The one or more computer programs include instructions. When the instructions are executed by the one or more processors, the voice control method according to any one of the first aspect and the possible implementations of the first aspect is performed.

According to an eighth aspect, an electronic device is provided, including one or more processors and one or more memories. The one or more memories store one or more computer programs. The one or more computer programs include instructions. When the instructions are executed by the one or more processors, the voice control method according to any one of the second aspect and the possible implementations of the second aspect is performed.

According to a ninth aspect, an electronic device is provided, including one or more processors and one or more memories. The one or more memories store one or more computer programs. The one or more computer programs include instructions. When the instructions are executed by the one or more processors, the voice control method according to any one of the third aspect and the possible implementations of the third aspect is performed.

According to a tenth aspect, a chip is provided. The chip includes a processor and a communication interface. The communication interface is configured to receive a signal and transmit the signal to the processor. The processor processes the signal, so that the voice control method according to any one of the first aspect and the possible implementations of the first aspect is performed.

According to an eleventh aspect, a chip is provided. The chip includes a processor and a communication interface. The communication interface is configured to receive a signal and transmit the signal to the processor. The processor processes the signal, so that the voice control method according to any one of the second aspect and the possible implementations of the second aspect is performed.

According to a twelfth aspect, a chip is provided. The chip includes a processor and a communication interface. The communication interface is configured to receive a signal and transmit the signal to the processor. The processor processes the signal, so that the voice control method according to any one of the third aspect and the possible implementations of the third aspect is performed.

According to a thirteenth aspect, a computer readable storage medium is provided. The computer readable storage medium stores computer instructions. When the computer instructions are run on a computer, the voice control method according to any one of the first aspect and the possible implementations of the first aspect is performed.

According to a fourteenth aspect, a computer readable storage medium is provided. The computer readable storage medium stores computer instructions. When the computer instructions are run on a computer, the voice control method according to any one of the second aspect and the possible implementations of the second aspect is performed.

According to a fifteenth aspect, a computer readable storage medium is provided. The computer readable storage medium stores computer instructions. When the computer instructions are run on a computer, the voice control method according to any one of the third aspect and the possible implementations of the third aspect is performed.

According to a sixteenth aspect, a computer program product is provided, including computer instructions. When the computer instructions are run on a computer, the voice control method according to any one of the first aspect and the possible implementations of the first aspect is performed.

According to a seventeenth aspect, a computer program product is provided, including computer instructions. When the computer instructions are run on a computer, the voice control method according to any one of the second aspect and the possible implementations of the second aspect is performed.

According to an eighteenth aspect, a computer program product is provided, including computer instructions. When the computer instructions are run on a computer, the voice control method according to any one of the third aspect and the possible implementations of the third aspect is performed.

### BRIEF DESCRIPTION OF DRAWINGS

FIG. 1 is a diagram of a scenario to which an embodiment of this application is applicable;
FIG. 2 is a schematic flowchart of a voice control method;
FIG. 3 is a schematic flowchart of a voice control method according to an embodiment of this application;
FIG. 4A to FIG. 4C are a schematic flowchart of another voice control method according to an embodiment of this application;
FIG. 5A and FIG. 5B are a schematic flowchart of a voice control method according to an embodiment of this application;
FIG. 6 is a schematic flowchart of a voice control method according to an embodiment of this application;
FIG. 7 is a schematic flowchart of another voice control method according to an embodiment of this application; and
FIG. 8 is a schematic flowchart of another voice control method according to an embodiment of this application.

### DESCRIPTION OF EMBODIMENTS

The following describes technical solutions of embodiments in this application with reference to accompanying drawings.

Before the technical solutions of this application are described, some technical terms related in embodiments of this application are first briefly described.

Internet of things (Internet of things, IoT) devices are devices that can connect to a network. Examples include desk lamps, routers, intelligent locks, smart refrigerators, and smart speakers. In embodiments of this application, an Internet of things device may be an electronic device, for example, a desk lamp or a television.

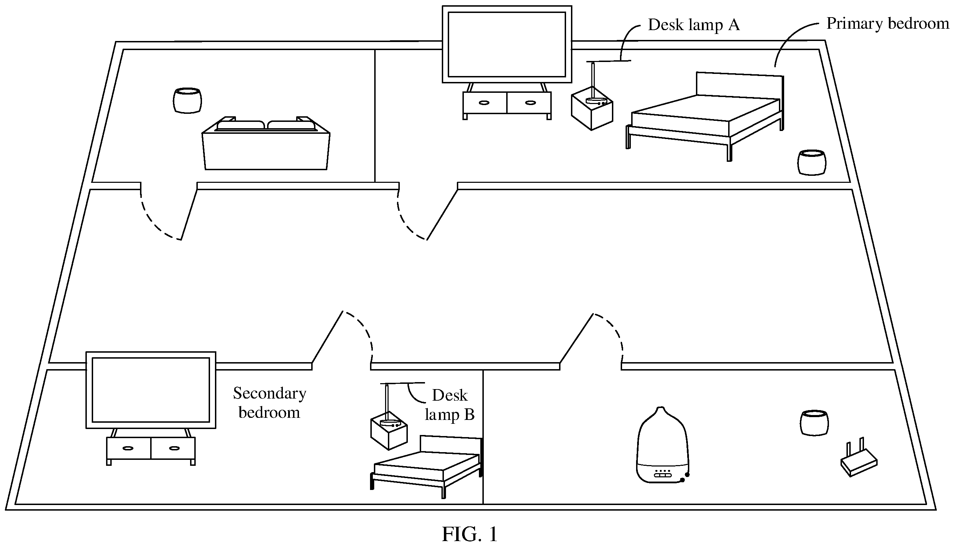

FIG. 1 is a diagram of a scenario to which an embodiment of this application is applicable. As shown in FIG. 1, a house of a user has a living room and a plurality of bedrooms. In a primary bedroom, there is a plurality of electronic devices such as a smart speaker, a television, and a desk lamp A. In a secondary bedroom, there is a plurality of electronic devices such as a television, a speaker, and a desk lamp B.

In this scenario, the user has a plurality of electronic devices of a same type or function, for example, the desk lamp A in the primary bedroom and the desk lamp B in the secondary bedroom that have a lighting function. It may be understood that when registering the desk lamp A and the desk lamp B, the user adds information about position space of the desk lamp A. For example, the position space of the desk lamp A is the primary bedroom, and position space of the desk lamp B is the secondary bedroom. In this case, when the user sends an instruction "turn on the light" through voice, a cloud server does not know whether the user wants to turn on the desk lamp located in the primary bedroom or the desk lamp located in the secondary bedroom. Therefore, the cloud server may further inquire of the user, and sends the "turn on the light" instruction to a target desk lamp (for example, the desk lamp A) after obtaining a response from the user, to turn on the target desk lamp (for example, the desk lamp A).

In this case, when the user controls an electronic device through voice, a plurality of rounds of interaction occur. Therefore, embodiments of this application intend to accurately control, in one interaction process, an electronic device that the user intends to operate.

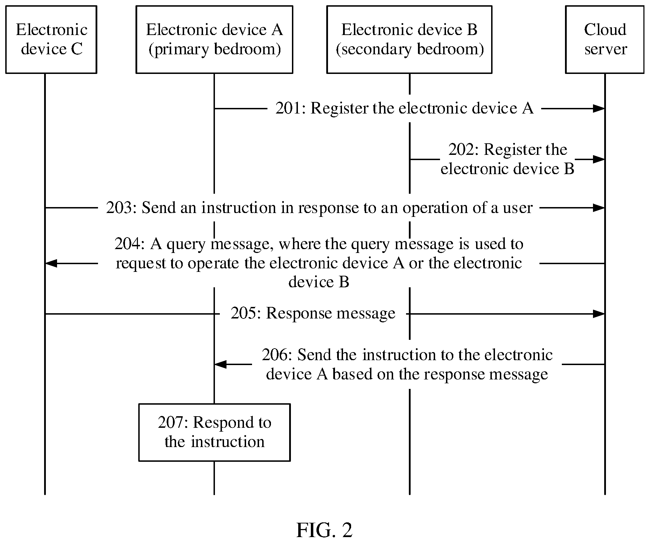

FIG. 2 is a schematic flowchart of a voice control method. As shown in FIG. 2, the method 200 includes step 201 to step 207. It should be understood that in the technical solution, an electronic device A, an electronic device B, and an electronic device C may be in a same wireless network, and may establish a network connection to a cloud server. For example, the electronic device A, the electronic device B, and the electronic device C are intelligent devices of a same user, for example, under a same Huawei account.
201: Register the electronic device A with a cloud server.
202: Register the electronic device B with the cloud server.

The electronic device A and the electronic device B are Internet of things (Internet of things, IoT) devices, and may be, for example, luminaires, smart speakers, or smart air conditioners.

It should be understood that the user may register the electronic device A and the electronic device B with the cloud server in an application (Application, App). For example, the user logs in to an account on an app 1, and may register the electronic device A and the electronic device B with the logged-in account (namely, the cloud server) by adding the electronic device A and the electronic device B to the app 1. In this case, the logged-in account may store device information (for example, device identifiers and media access control MAC addresses) of the electronic device A and the electronic device B and spatial positions (for example, a primary bedroom, a secondary bedroom, or a living room) in which the devices are located, so that the cloud server can control the electronic device based on an instruction of the user.

In this embodiment, an example in which the electronic device A is a desk lamp in a primary bedroom and the electronic device B is a desk lamp in a secondary bedroom is used for description.

203: The electronic device C sends an instruction to the cloud server in response to an operation of the user.

For example, if the electronic device A and the electronic device B are desk lamps, and the electronic device C is a mobile phone of the user, the user sends a "turn on the light" instruction through a voice assistant, and the mobile phone may send the "turn on the light" instruction to the cloud server.

204: The cloud server sends a query message to the electronic device C, where the query message is used to request to operate the electronic device A or the electronic device B.

It should be understood that when the electronic device A and the electronic device B are devices of a same type, for example, both are desk lamps, when the user sends the "turn on the light" instruction, the cloud server cannot accurately learn which desk lamp the user intends to turn on. Therefore, the cloud server needs to inquire of the user which specific device the "turn on the light" instruction needs to be delivered to.

In an example, the cloud server may remind the user in a voice broadcasting manner. For example, the cloud server may play a voice "Do you want to turn on the desk lamp in the primary bedroom or the desk lamp in the secondary bedroom", to inquire of the user about the desk lamp that needs to be turned on.

205: The electronic device C sends a response message to the cloud server in response to an operation of the user.

In an example, the user sends "the desk lamp in the primary bedroom" through the voice assistant, and the mobile phone sends a response message "the desk lamp in the primary bedroom" to the server.

206: The cloud server sends the instruction to a target electronic device based on the response message.

For example, when the response message indicates that the user intends to turn on the desk lamp in the primary bedroom, the target electronic device is the electronic device A, and the cloud server sends the "turn on the light" instruction to the electronic device A based on the response message.

207: The electronic device A responds to the instruction.

For example, after receiving the "turn on the light" instruction, the desk lamp in the primary bedroom is turned on for lighting in response to the "turn on the light" instruction.

It may be understood that when the user has a plurality of electronic devices (such as desk lamps) of a same type or function, when the user controls an electronic device through voice, the cloud server needs to inquire about which target electronic device the user intends to operate. The target electronic device can be operated only after a response is obtained from the user. An entire process is complex, and the user needs to perform a plurality of rounds of sessions. This reduces voice control efficiency and degrades user experience.

In view of this, embodiments of this application provide a voice control method, to improve voice control efficiency and improve user experience.

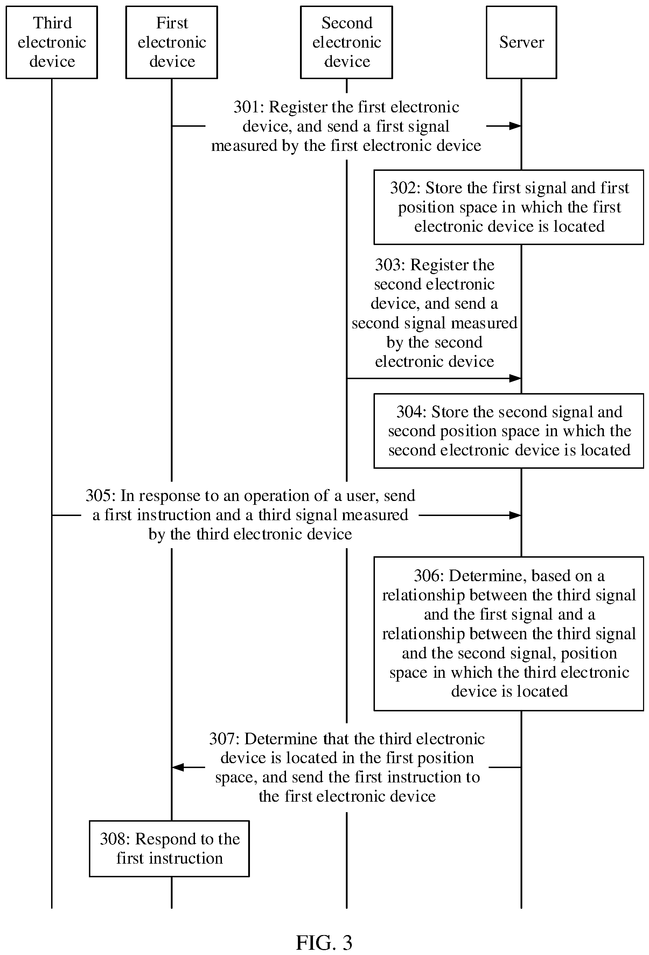

The following describes in detail voice control methods according to embodiments of this application with reference to FIG. 3 to FIG. 8.

In embodiments of this application, an example in which a first electronic device, a second electronic device, and a third electronic device are located in a same local area network is used for description. For example, the first electronic device, the second electronic device, and the third electronic device are connected to a same Wi-Fi network. It should be understood that the first electronic device, the second electronic device, and the third electronic device may alternatively be connected through Bluetooth, ultra-wideband (ultra-wideband, UWB), or Ethernet. This is not limited in this embodiment of this application.

FIG. 3 is a schematic flowchart of a voice control method according to an embodiment of this application. As shown in FIG. 3, the method 300 may include step 301 to step 308.

301: In response to an operation of a user, register a first electronic device with a server, and send, to the server, a first signal measured by the first electronic device.

For example, the user registers the first electronic device with an app 1 (for example, AI life) by adding the first electronic device, and selects first position space in which the first electronic device is located. When the first electronic device is registered or within a period of time after the first electronic device is registered, the first electronic device measures the first signal of a wireless network to which the first electronic device is connected, and sends or uploads the first signal to the server. The first position space may be a room in which the first electronic device is located, for example, a primary bedroom, a secondary bedroom, or a kitchen.

Specifically, the first signal may be signal strength, power, or the like of the wireless network to which the first electronic device is connected, or the first signal may be a result obtained through calculation based on signal strength, a floor plan of the user, device distribution, or the like.

The server may be a cloud server, for example, a cloud server configured to store user account information, or the server may be a local server. Alternatively, the server may be an electronic device, for example, a mobile phone. This is not limited in this embodiment of this application.

Optionally, the first electronic device periodically sends the first signal measured by the first electronic device to the server. Correspondingly, the server may periodically store the first signal (in other words, updating the first signal). It should be understood that a cycle of periodically sending the first signal may be the same as or different from a cycle of periodically storing the first signal.

For example, the first electronic device measures the first signal at an interval of preset duration, and sends the first signal to the server. The preset duration may be 4 hours, 8 hours, or the like. A specific value of the preset duration is not limited in this embodiment of this application. Correspondingly, the server may update the first signal each time the server receives the first signal. Alternatively, the server may update the first signal at an interval of another preset duration, for example, 2 hours, 3 hours, or the like.

It should be understood that if the first electronic device is located in the first position space, for example, in the primary bedroom, because the primary bedroom is of a specific space size, and an actual position of the first electronic device may change, for example, the first electronic device is moved by the user, when the first electronic device is located at a different position in the primary bedroom, although the first electronic device is still located in the primary bedroom, a first signal measured by the first electronic device may be different. For example, the first electronic device is a desk lamp, and a first signal measured by the desk lamp at one side of a bed may be different from a first signal measured by the desk lamp at another side of the bed. Therefore, when the first electronic device periodically sends the first signal measured by the first electronic device to the server, the first signal is updated, to better reflect a current position of the first electronic device.

302: The server stores the first signal and the first position space in which the first electronic device is located.

In an example, the server stores a correspondence between the first signal and the first position space in related information of the first electronic device, for example, using a key-value pair or a table.

In another example, the server stores the first signal and the first position space together as one item in the related information of the first electronic device.

It should be understood that the first signal and the first position space may be stored in the server in another manner. This is not limited in this application.

303: In response to an operation of the user, register a second electronic device with the server, and send, to the server, a second signal measured by the second electronic device.

The first electronic device and the second electronic device are electronic devices having a same function, for example, both are desk lamps having a lighting function.

It should be understood that for the registering the second electronic device with the server, refer to the foregoing related descriptions of registering the first electronic device with the server. For brevity, details are not described herein again.

It should be further understood that position space in which the second electronic device is located is second position space, for example, the secondary bedroom.

Optionally, the second electronic device periodically sends the second signal measured by the second electronic device to the server.

It should be understood that for content about that the second electronic device periodically sends the measured second signal to the server, refer to the foregoing related descriptions about that the first electronic device periodically sends the first signal. For brevity, details are not described herein again.

304: The server stores the second signal and the second position space in which the second electronic device is located.

It should be understood that for a manner of storing the second signal and the second position space in the server, refer to related descriptions of the first signal and the first position space in the server. For brevity, details are not described herein again.

It may be understood that step 303 and step 304 may be performed before step 301. This is not limited in this embodiment of this application.

It may be understood that in some embodiments, step 301 to step 304 are optional steps. In other words, the server prestores the first signal sent by the first electronic device and the first position space in which the first electronic device is located, the second signal sent by the second electronic device, and the second position space in which the second electronic device is located. In this case, the method 300 may be performed starting from step 305.

305: In response to a voice operation of the user, a third electronic device sends, to the server, a first instruction and a third signal measured by the third electronic device.

In a possible implementation, the third electronic device may be a mobile phone. In this case, the user may send the first instruction, for example, "turn on the light", through a voice assistant. In response to the voice operation of the user, the mobile phone may send the first instruction to the server. At the same time, the mobile phone may further measure the third signal of the wireless network to which the mobile phone is currently connected, and send the third signal to the server. Alternatively, the first instruction carries the third signal.

In another possible implementation, the third electronic device may be a mobile phone. In this case, the user may send the first instruction, for example, "turn on the light", through a voice assistant. In response to the voice operation of the user, the mobile phone may send the first instruction to the server. After that, within preset time, the mobile phone may further measure the third signal of the wireless network to which the mobile phone is currently connected, and send the third signal to the server.

For the third signal, refer to related descriptions of the first signal. For brevity, details are not described herein again.

306: The server determines, based on a relationship between the third signal and the first signal and a relationship between the third signal and the second signal, position space in which the third electronic device is located.

In an example, the first signal, the second signal, and the third signal correspond to signal strength. The first signal corresponds to signal strength A, the second signal corresponds to signal strength B, and the third signal corresponds to signal strength C. In this case, the server may determine, based on a relationship between an absolute value A of a difference between the signal strength A and the signal strength C and an absolute value B of a difference between the signal strength B and the signal strength C, the position space in which the third electronic device is located.

In a possible implementation, when the absolute value A is less than the absolute value B, it indicates that the third electronic device is closer to the first electronic device. In this case, the third electronic device and the first electronic device may be located in same position space, for example, both are in the primary bedroom. In this case, the server may determine that the position space in which the third electronic device is located is the first position space, or the server may determine that a position at which the third electronic device is located is closer to the first position space.

In another possible implementation, when determining the position space in which the third electronic device is located, the server may determine, based on a magnitude relationship between the absolute value A and a preset difference and a magnitude relationship between the absolute value B and the preset difference, the position space in which the third electronic device is located. For example, when the absolute value A is less than or equal to the preset difference, and the absolute value B is greater than the preset difference, it may be determined that the third electronic device is located in the first position space. When the absolute value B is less than or equal to the preset difference, and the absolute value A is greater than the preset difference, it may be determined that the third electronic device is located in the second position space.

307: The server sends the first instruction to the first electronic device when determining that the third electronic device is located in the first position space.

In step 307, when the server determines that the third electronic device is located in the first position space, it indicates that the third electronic device and the first electronic device are located in the same position space or the position of the third electronic device is close to the position space in which the first electronic device is located. In this case, the server determines that an electronic device that the user intends to control is the first electronic device, and the server may send the first instruction to the first electronic device. For example, the first instruction is the "turn on the light" instruction.

In some other embodiments, when the server determines that the third electronic device is closer to the first electronic device than to the second electronic device, or the server determines that the third electronic device is closer to the first position space, the server may send the first instruction to the first electronic device.

Optionally, when the server determines that the third electronic device is located in the second position space or is closer to the second position space, the server may send the first instruction to the second electronic device.

308: The first electronic device responds to the first instruction.

For example, the first electronic device is a desk lamp, and the first instruction is the "turn on the light" instruction. In this case, the first electronic device performs lighting in response to the "turn on the light" instruction.

For example, the first electronic device is a television, and the first instruction is a "turn-on" instruction. In this case, the first electronic device is turned on in response to the "turn-on" instruction.

It should be understood that in this embodiment, two electronic devices having a same function are used as examples for description. However, this should not constitute a limitation on this application. In another embodiment, there may be more electronic devices having a same function, for example, three or more electronic devices. In this case, the user uses a similar method for controlling the electronic devices through voice.

It should be understood that a specific sequence for performing step 301 to step 308 is not limited in this embodiment of this application. In some embodiments, some of step 301 to step 308 may not be performed, or may be replaced with other steps.

It may be understood that the server in the foregoing steps may alternatively be an electronic device, for example, a mobile phone, or the server may be an application program (for example, AI life) deployed in the electronic device. This is not limited in this embodiment of this application.

In this way, in an embodiment of this application, when the user adds an electronic device, the electronic device uploads, to the server, a signal measured by the electronic device. The server stores the signal and position space in which the electronic device is located. When the user sends a voice instruction, the server may determine, based on a signal sent by an electronic device that sends the instruction and the stored signal, position space in which the electronic device that sends the instruction is located, and send the instruction to the electronic device in the position space, to control the electronic device in the position space. In the technical solution, when a plurality of electronic devices that are owned by the user and that have a same function are distributed in different position space, the user can control, through one round of simple voice interaction, an electronic device that the user intends to control. This improves voice control efficiency and improves user experience.

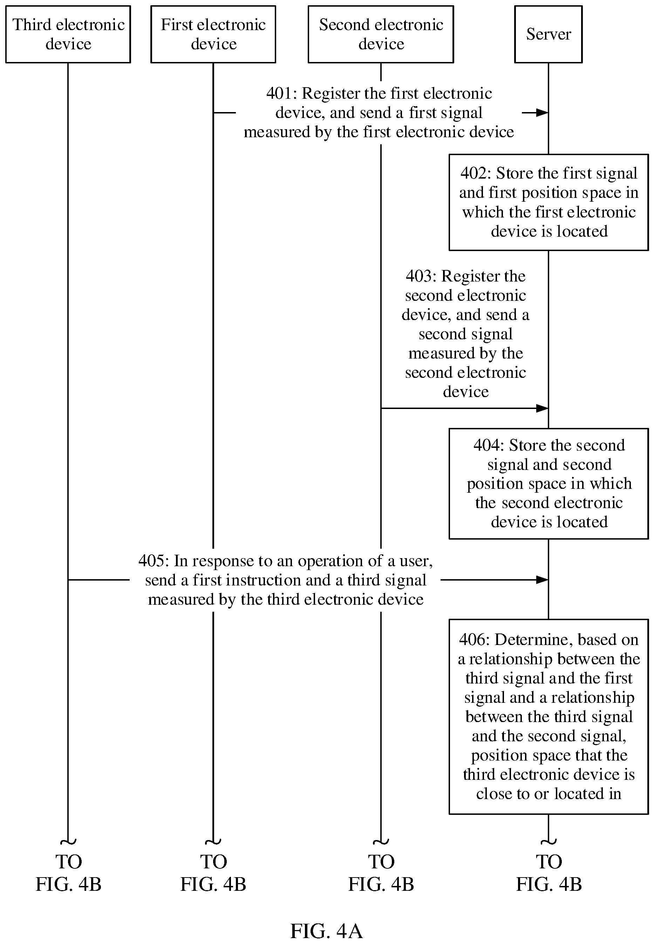

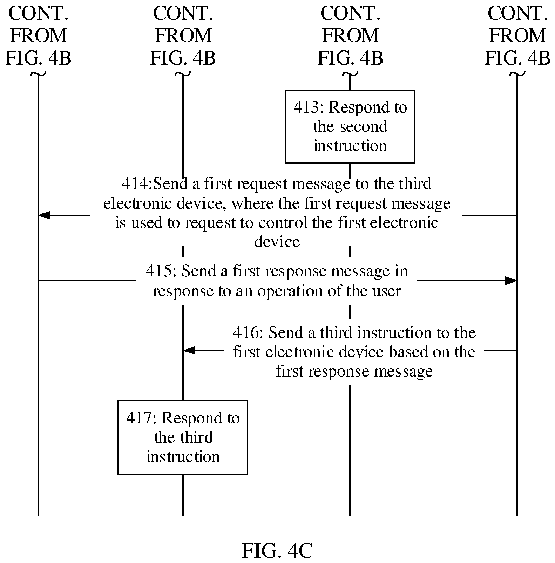

In some embodiments, after the user controls the electronic device A in a room A through a voice instruction, the user may move to another room B, that is, a position of the user changes. In this case, an electronic device in a room B may be controlled through the same voice instruction. The following describes the technical solution in detail with reference to FIG. 4A to FIG. 4C.

FIG. 4A to FIG. 4C are a schematic flowchart of another voice control method according to an embodiment of this application. As shown in FIG. 4A to FIG. 4C, the method 400 may include step 401 to step 417.

401: In response to an operation of a user, register a first electronic device with a server, and send, to the server, a first signal measured by the first electronic device.

402: The server stores the first signal and first position space in which the first electronic device is located.

403: In response to an operation of the user, register a second electronic device with the server, and send, to the server, a second signal measured by the second electronic device.

404: The server stores the second signal and second position space in which the second electronic device is located.

405: In response to a voice operation of the user, a third electronic device sends, to the server, a first instruction and a third signal measured by the third electronic device.

406: The server determines, based on a relationship between the third signal and the first signal and a relationship between the third signal and the second signal, position space in which the third electronic device is located.

407: The server sends the first instruction to the first electronic device when determining that the third electronic device is located in the first position space.

408: The first electronic device responds to the first instruction.

It should be understood that for step 401 to step 408, refer to related descriptions of step 301 to step 308. For brevity, details are not described herein again.

409: The third electronic device is moved to the second position space.

For example, the third electronic device may be a mobile phone. That the third electronic device is moved to the second position space may be understood as that the user takes the mobile phone and moves from the first position space to the second position space, or that the user takes the mobile phone and moves from a position close to the first position space to the second position space or to a position close to the second position space. In other words, a physical position of the third electronic device changes.

410: In response to a voice operation of the user, the third electronic device sends a second instruction and a fourth signal measured by the third electronic device.

In a possible implementation, the third electronic device may be a mobile phone. In this case, the user may send the second instruction, for example, "turn on the light", through a voice assistant. In response to the voice operation of the user, the mobile phone may send the second instruction to the server. At the same time, the mobile phone may further measure the fourth signal of a wireless network to which the mobile phone is currently connected, and send the fourth signal to the server. Alternatively, the first instruction carries the fourth signal.

In another possible implementation, the third electronic device may be a mobile phone. In this case, the user may send the first instruction, for example, "turn on the light", through a voice assistant. In response to the voice operation of the user, the mobile phone may send the second instruction to the server. After that, within preset time, the mobile phone may further measure the fourth signal of a wireless network to which the mobile phone is currently connected, and send the fourth signal to the server.

For the fourth signal, refer to related descriptions of the first signal. For brevity, details are not described herein again.

In another embodiment, the third electronic device may periodically send the measured fourth signal. When determining, based on a relationship between the fourth signal and the stored first signal and a relationship between the fourth signal and the stored second signal, that the third electronic device is located in or close to the second position space, the server may further autonomously send, with reference to time information, the instruction to the second electronic device located in the second position space. For example, the second electronic device is a desk lamp in a secondary bedroom. When determining that the third electronic device is located in or close to the secondary bedroom, the server may further determine, with reference to the current time, for example, 7 p.m., that the user may have a requirement for turning on the light. In this case, the server may directly send a "turn on the light" instruction to the desk lamp in the secondary bedroom, without inquiring with the user or sending the instruction by the user. When the user moves from a primary bedroom to the secondary bedroom, the desk lamp in the secondary bedroom may be automatically turned on. The technical solution can further improve user experience. Alternatively, when determining that the third electronic device is located in or close to a secondary bedroom, the server may further determine, with reference to the current time, for example, 7 p.m., that the user may have a requirement for turning on the light. In this case, the server may send a query message to the user, to determine whether the light needs to be turned on. After obtaining an instruction for turning on the light, a "turn on the light" instruction is further sent to the desk lamp in the secondary bedroom. In the technical solution, the user does not need to initiate an instruction, and this improves user experience.

411: The server determines, based on a relationship between the fourth signal and the first signal and a relationship between the fourth signal and the second signal, position space that the third electronic device is close to or located in.

In an example, the first signal, the second signal, and the fourth signal are signal strength. The first signal corresponds to the signal strength A, the second signal corresponds to the signal strength B, and the fourth signal corresponds to signal strength D. In this case, the server may determine, based on a relationship between an absolute value C of a difference between the signal strength A and the signal strength D and an absolute value D of a difference between the signal strength B and the signal strength D, the position space that the third electronic device is close to or located in.

In a possible implementation, when the absolute value C is less than the absolute value D, it indicates that the third electronic device is closer to the first electronic device than to the second electronic device. In this case, the third electronic device and the first electronic device may be located in same position space, for example, both are in the primary bedroom. In this case, the server may determine that the position space in which the third electronic device is located is the first position space, or the server may determine that a position at which the third electronic device is located is close to the first position space.

In another possible implementation, when determining the position space in which the third electronic device is located, the server may determine, based on a magnitude relationship between the absolute value C and a preset difference and a magnitude relationship between the absolute value D and the preset difference, the position space in which the third electronic device is located. For example, when the absolute value C is less than or equal to the preset difference, and the absolute value D is greater than the preset difference, it may be determined that the third electronic device is close to or located in the first position space. When the absolute value D is less than or equal to the preset difference, and the absolute value C is greater than the preset difference, it may be determined that the third electronic device is close to or located in the second position space.

412: The server sends the second instruction to the second electronic device when determining that the third electronic device is located in the second position space.

When the server determines that the third electronic device is located in the second position space, it indicates that the third electronic device and the second electronic device are located in the same position space or the position of the third electronic device is close to the position space in which the second electronic device is located. In this case, the server may determine that an electronic device that the user intends to control is the second electronic device, and the server may send the second instruction to the second electronic device. For example, the second instruction is the "turn on the light" instruction.

Optionally, the server may send the second instruction to the second electronic device when determining that the third electronic device is close to the second position space.

413: The second electronic device responds to the second instruction.

For example, the second electronic device is a desk lamp, and the second instruction is the "turn on the light" instruction. In this case, the second electronic device performs lighting in response to the "turn on the light" instruction.

For example, the second electronic device is a television, and the second instruction is a "turn-on" instruction. In this case, the second electronic device is turned on in response to the "turn-on" instruction.

Optionally, it is considered that the user has moved from the first position space to the second position space or is close to the second position space. To reduce power consumption of the electronic device or to improve an intelligence level, the method 400 may further include steps 414 to 417.

414: The server sends a first request message to the third electronic device, where the first request message is used to request to control the first electronic device.

The first request message may request whether to turn off the first electronic device. For example, the first request message may be "You have left the secondary bedroom. Do you want to turn off the desk lamp in the secondary bedroom?" The server may send the first request message to the third electronic device, and the third electronic device plays the first request message through voice.

415: The third electronic device sends a first response message to the server in response to a voice operation of the user.

For example, when the first request message is used to request whether to turn off the first electronic device, the first response message may be "Yes" or "No".

In a possible implementation, when the first response message is "Yes", step 416 and step 417 may be performed.

In another possible implementation, when the first response message is "No", the server may not send an instruction to the first electronic device.

416: The cloud server sends a third instruction to the first electronic device based on the first response message.

For example, if the first response message is "Yes", after receiving the first response message, the server sends the third instruction, for example, a "turn off the light" instruction, to the first electronic device.

417: The first electronic device responds to the third instruction.

For example, the first electronic device is a desk lamp, and the third instruction is the "turn off the light" instruction. In this case, the first electronic device is turned off in response to the "turn off the light" instruction.

Optionally, in some embodiments, after determining that the user moves from the first position space to the second position space or is close to the second position space, the server may directly send the third instruction to the first electronic device without inquiring with the user. This can improve an intelligence level of a smart home and improve user experience.

It should be understood that a specific sequence for performing step 401 to step 417 is not limited in this embodiment of this application. In some embodiments, some of step 401 to step 417 may not be performed, or may be replaced with other steps.

It may be understood that the server in the foregoing steps may alternatively be an electronic device, for example, a mobile phone, or the server may be an application program (for example, AI life) deployed in the electronic device. This is not limited in this embodiment of this application.

According to this embodiment of this application, when the position of the third electronic device (for example, a mobile phone) of the user changes, the server may determine, based on a signal reported by the third electronic device, position space in which the third electronic device is currently located. In this way, when the user sends a voice instruction, an electronic device in position space in which the user is currently located is accurately controlled. User experience is improved. In addition, the server may further autonomously or semi-autonomously control an electronic device in the position space that the user leaves, to reduce power consumption of the electronic device and further improve user experience.

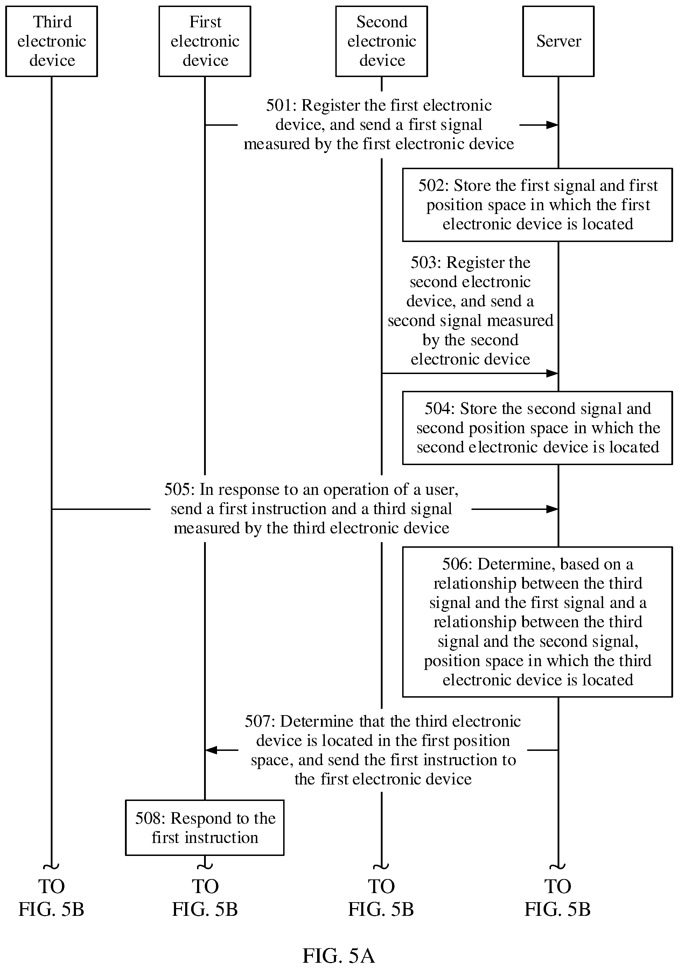

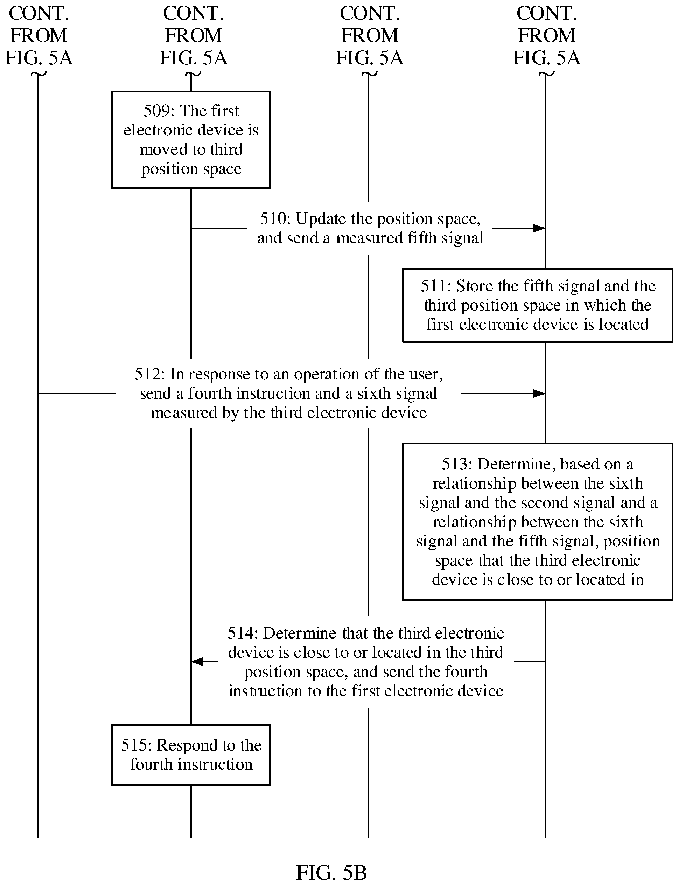

In some embodiments, physical positions of a plurality of electronic devices owned by the user may change. For example, when the user moves a desk lamp in the primary bedroom to the secondary bedroom, the server may update related information of the electronic device. In this way, the user controls the electronic device more accurately through voice. The following describes the technical solution with reference to FIG. 5A and FIG. 5B.

FIG. 5A and FIG. 5B are a schematic flowchart of a voice control method according to an embodiment of this application. As shown in FIG. 5A and FIG. 5B, the method 500 may include step 501 to step 515.

501: In response to an operation of a user, register a first electronic device with a server, and send, to the server, a first signal measured by the first electronic device.

502: The server stores the first signal and first position space in which the first electronic device is located.

503: In response to an operation of the user, register a second electronic device with the server, and send, to the server, a second signal measured by the second electronic device.

504: The server stores the second signal and second position space in which the second electronic device is located.

505: In response to a voice operation of the user, a third electronic device sends, to the server, a first instruction and a third signal measured by the third electronic device.

506: The server determines, based on a relationship between the third signal and the first signal and a relationship between the third signal and the second signal, position space in which the third electronic device is located.

507: The server sends the first instruction to the first electronic device when determining that the third electronic device is located in the first position space.

508: The first electronic device responds to the first instruction.

509: The first electronic device is moved to third position space.

For example, the user moves the first electronic device from the primary bedroom to the secondary bedroom, in other words, a physical position of the third electronic device changes.

510: Update the position space of the first electronic device, and send a measured fifth signal to the server.

The user may modify the position space of the first electronic device on an app 1 (for example, AI life), to modify the position space of the first electronic device to the third position space.

It should be understood that for the fifth signal, refer to related descriptions of the first signal. For brevity, details are not described herein again.

Optionally, the first electronic device periodically sends the measured fifth signal to the server. Correspondingly, the server may periodically store the fifth signal (in other words, updating the fifth signal). It should be understood that a cycle of periodically sending the fifth signal may be the same as or different from a cycle of periodically storing the fifth signal.

511: The server stores the fifth signal and the third position space in which the first electronic device is located.

In an example, the server stores a correspondence between the fifth signal and the third position space in related information of the first electronic device, for example, using a key-value pair or a table.

In another example, the server stores the fifth signal and the third position space together as one item in the related information of the first electronic device.

It should be understood that the fifth signal and the third position space may be stored in the server in another manner. This is not limited in this application.

512: In response to a voice operation of the user, the third electronic device sends a fourth instruction and a measured sixth signal to the server.

In an example, the third electronic device is a mobile phone of the user, and the user carries the mobile phone. The user may send the fourth instruction to the server through a voice assistant. At the same time, the mobile phone may further measure a sixth signal of a wireless network to which the mobile phone is currently connected, and send the sixth signal to the server. Alternatively, the fourth instruction carries the sixth signal.

In another example, in response to the voice operation of the user, the mobile phone may send the fourth instruction to the server. After that, within preset time, the mobile phone may further measure a sixth signal of a wireless network to which the mobile phone is currently connected, and send the sixth signal to the server.

For the sixth signal, refer to related descriptions of the first signal. For brevity, details are not described herein again.

513: The server determines, based on a relationship between the sixth signal and the second signal and a relationship between the sixth signal and the fifth signal, position space that the third electronic device is close to or located in.

It should be understood that for step 513, refer to related descriptions of the steps 306 and 411. For brevity, details are not described herein again.

514: The server sends the fourth instruction to the first electronic device when determining that the third electronic device is close to or located in the third position space.

For step 514, refer to related descriptions of step 412. For brevity, details are not described herein again.

515: The first electronic device responds to the fourth instruction.

For example, the first electronic device is a desk lamp, and the fourth instruction is a "turn on the light" instruction. In this case, the first electronic device performs lighting in response to the "turn on the light" instruction.

For example, the first electronic device is a television, and the fourth instruction is a "turn-on" instruction. In this case, the first electronic device is turned on in response to the "turn-on" instruction.

It should be understood that a specific sequence for performing step 501 to step 515 is not limited in this embodiment of this application. In some embodiments, some of step 501 to step 515 may not be performed, or may be replaced with other steps.

It may be understood that the server in the foregoing steps may alternatively be an electronic device, for example, a mobile phone, or the server may be an application program (for example, AI life) deployed in the electronic device. This is not limited in this embodiment of this application.

According to this embodiment of this application, when the position space of the first electronic device changes, for example, being moved from the primary bedroom to the secondary bedroom, the server may store the fifth signal measured by the first electronic device in the new position space and the third position space in which the first electronic device is currently located, to update information about the first electronic device. After a voice instruction of the user is received, position space that the user is close to or located in may be obtained through calculation, and the instruction is sent to an electronic device in the position space. The technical solution can improve voice control efficiency and improve user experience.

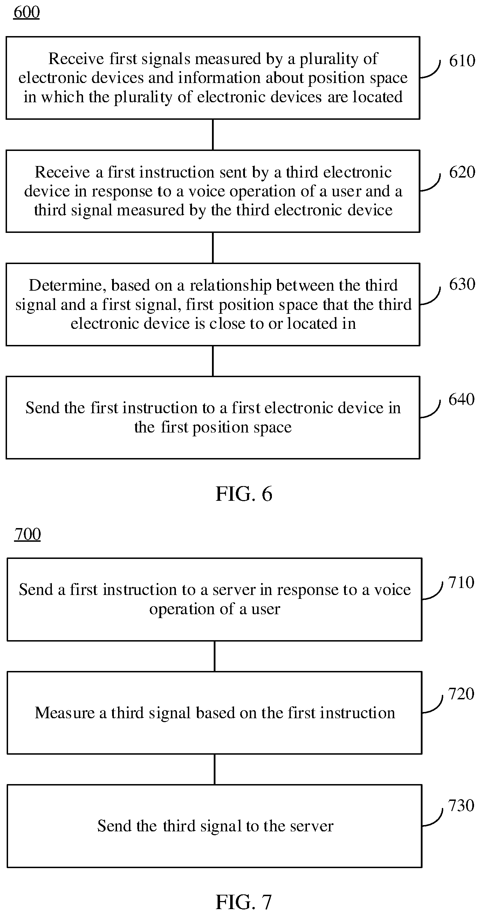

FIG. 6 is a schematic flowchart of a voice control method according to an embodiment of this application. As shown in FIG. 6, the method 600 may be applied to a target electronic device. The method 600 may include step 610 to step 640.

610: The target electronic device receives first signals measured by a plurality of electronic devices and information about position space in which the plurality of electronic devices are located, where the plurality of electronic devices have a same function.

The information about position space may indicate position space in which the electronic devices are located. For example, the first electronic device is located in first position space, and the second electronic device is located in second position space.

It should be understood that each of the plurality of electronic devices has corresponding position space information. Each of the plurality of electronic devices measures a first signal. In other words, each electronic device measures one first signal and has one piece of position space information.

In this embodiment of this application, the target electronic device may be a cloud server, a local server, or the like. Alternatively, the target electronic device may be a mobile phone or the like.

That the plurality of electronic devices have a same function may be understood as that the plurality of electronic devices may be electronic devices of a same type. For example, the plurality of electronic devices are all desk lamps, in other words, the plurality of electronic devices all have a lighting function.

For example, refer to FIG. 3. The target electronic device may be a server. That the target electronic device receives first signals measured by a plurality of electronic devices and information about position space in which the plurality of electronic devices are located, where the plurality of electronic devices have a same function may be understood as that in response to an operation of a user, the plurality of electronic devices are registered with the server. For example, after the user registers the plurality of electronic devices with an app 1 (for example, AI Life) by adding the plurality of electronic devices and the corresponding position space associated with the plurality of electronic devices, the first signals measured by the plurality of the electronic devices are received. For another example, the plurality of electronic devices may further directly send, to the server, the measured first signals and the position space information of the plurality of electronic devices. Alternatively, the plurality of electronic devices may further separately send in an unrestricted order, to the server, the first signals and the information about the position space in which the plurality of electronic devices are located.

It may be understood that each of the plurality of electronic devices measures a first signal, and sends the first signal to the server. For example, the first signal may be signal strength, power, or the like of the wireless network to which the first electronic device is connected, or the first signal may be a result obtained through calculation based on signal strength, a floor plan of the user, device distribution, or the like.

It should be understood that the target electronic device and the plurality of electronic devices may be located in a same local area network, for example, being connected to a same Wi-Fi network. The target electronic device and the plurality of electronic devices may alternatively be connected through Bluetooth, UWB, or Ethernet. This is not limited in this embodiment of this application.

It may be understood that after periodically receiving the first signals measured by the plurality of electronic devices and the information about the position space in which the plurality of electronic devices are located, the target electronic device may store correspondences between the first signals and the position space information. For example, a first signal measured by an electronic device A and position space in which the electronic device A is located are stored in related information of the electronic device A.

620: The target electronic device receives a first instruction sent by a third electronic device in response to a voice operation of the user and a third signal measured by the third electronic device.

The first instruction may be a voice instruction, and may be control commands such as turning on a light or turning off a light.

The third electronic device may be a mobile phone of the user.

It should be understood that the target electronic device and the third electronic device may alternatively be a same device. For example, the target electronic device may be a cloud server or an application deployed in the third electronic device. Alternatively, for the target electronic device, a remote interface is reserved in the third electronic device. Alternatively, the target electronic device (for example, a cloud server) may be accessed by accessing an application in the third electronic device. This is not limited in this embodiment of this application.

For example, refer to step 305 in FIG. 3. For brevity, details are not described again.

630: The target electronic device determines, based on a relationship between the third signal and a first signal, first position space that the third electronic device is close to or located in.

For ease of description, in this embodiment of this application, for example, there are two electronic devices: a first electronic device and a second electronic device. In this case, there are also two first signals: a first signal A and a first signal B. The first electronic device is located in first position space, and the second electronic device is located in second position space.

The first signal A, the first signal B, and the third signal may be signal strength. The first signal A corresponds to signal strength A, the first signal B corresponds to signal strength B, and the third signal corresponds to signal strength C. In this case, the target electronic device may determine, based on a relationship between an absolute value A of a difference between the signal strength A and the signal strength C and an absolute value B of a difference between the signal strength B and the signal strength C, the position space that the third electronic device is close to or located in.

In a possible implementation, when the absolute value A is less than the absolute value B, it indicates that the third electronic device is closer to the first electronic device than to the second electronic device. In this case, the third electronic device and the first electronic device may be located in same position space, for example, both are in the primary bedroom. In this case, the server may determine that the position space in which the third electronic device is located is the first position space, or the server may determine that a position at which the third electronic device is located is closer to the first position space.

In another possible implementation, when determining the position space in which the third electronic device is located, the server may determine, based on a magnitude relationship between the absolute value A and a preset difference and a magnitude relationship between the absolute value B and the preset difference, the position space in which the third electronic device is located. For example, when the absolute value A is less than or equal to the preset difference, and the absolute value B is greater than the preset difference, it may be determined that the third electronic device is located in the first position space or is close to the first position space. When the absolute value B is less than or equal to the preset difference, and the absolute value A is greater than the preset difference, it may be determined that the third electronic device is located in the second position space or is close to the second position space.

640: The target electronic device sends the first instruction to a first electronic device in the first position space, where the first instruction is used to control the first electronic device.

When determining that the position space that the third electronic device is close to or located in is the first position space, the target electronic device may determine that an electronic device that the user intends to control is the electronic device in the first position space.

For example, the first instruction is a "turn on the light" instruction and is used to control the first electronic device to be turned on.

In this way, in an embodiment of this application, the target electronic device may store the first signals measured by the plurality of electronic devices and the position space in which the plurality of electronic devices are located. When receiving the first instruction and the third signal that are sent by the third electronic device, the target electronic device may determine, based on the relationship between the third signal and a first signal, first position space that the electronic device is close to or located in, and send the first instruction to the first electronic device in the first position space. In the technical solution, the target electronic device may determine, based on a signal measured by an electronic device, position space in which the electronic device is located, and send an instruction to another electronic device in the position space. In this way, an intelligent device in position space in which the user is located can be controlled accurately through voice, and interaction is simple. This improves voice control efficiency and user experience.

In some embodiments, that the target electronic device receives first signals measured by a plurality of electronic devices and information about position space in which the plurality of electronic devices are located includes: The target electronic device periodically receives the first signals measured by the plurality of electronic devices and/or the position space in which the plurality of electronic devices are located.

For example, the plurality of electronic devices periodically send, to the target electronic device, the first signals measured by the electronic devices and the information about the position space in which the plurality of electronic devices are located. Correspondingly, the target electronic device periodically receives the first signals and the position space information. For example, an electronic device measures a first signal at an interval of preset duration, and sends, to the target electronic device, the first signal and information about position space in which the electronic device is located. Correspondingly, the target electronic device receives the first signal and the position space at an interval of preset duration.

In some embodiments, when the position space of the plurality of electronic devices does not change, the target electronic device may periodically receive the first signals measured by the plurality of electronic devices.

In this embodiment of this application, the target electronic device may periodically receive the first signals measured by the plurality of electronic devices and/or the information about the position space in which the plurality of electronic devices are located. In this way, the target electronic device can update information about the electronic device, to better reflect a current position of the electronic device.

In some embodiments, when first target position space that the third electronic device is close to or located in changes, the method 600 further includes: The target electronic device receives a second instruction sent by the third electronic device and a fourth signal measured by the third electronic device. The target electronic device determines, based on a relationship between the fourth signal and a first signal, second position space that the third electronic device is close to or located in. The target electronic device sends the second instruction to the second electronic device in the second position space.

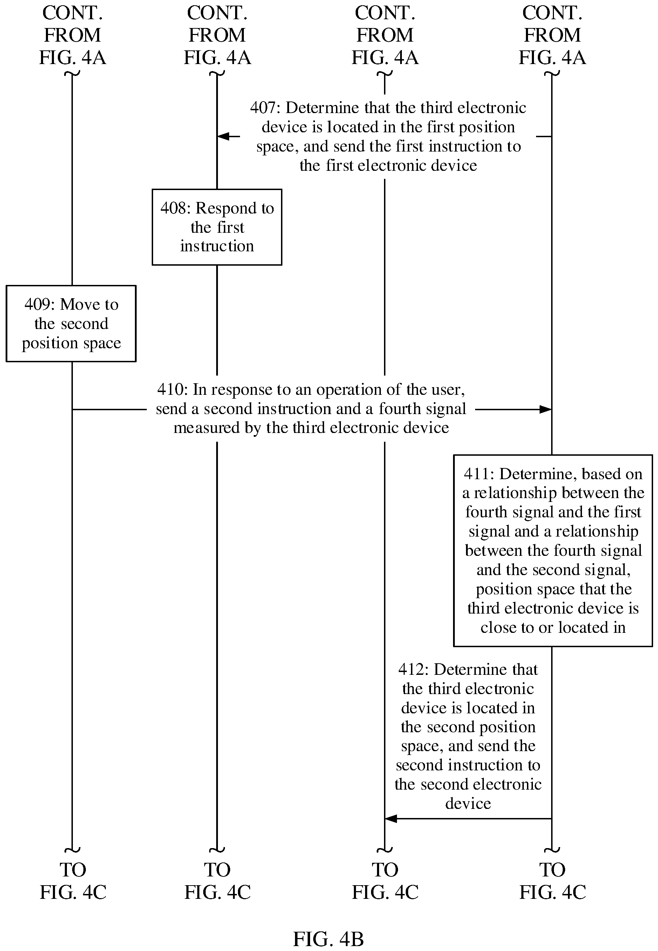

For example, for the technical solution, refer to step 409 to step 412 in FIG. 4B. For brevity, details are not described herein again.

In this embodiment of this application, the position space that the third electronic device is close to or located in may change. For example, the user takes a mobile phone and moves from a primary bedroom to a secondary bedroom. In this case, the target electronic device may receive the second instruction sent by the electronic device and the fourth signal measured by the electronic device, determine, based on the relationship between the fourth signal and the first signal, the second position space that the electronic device is close to or located in, and sends the second instruction to the second electronic device in the second position space. In the technical solution, the target electronic device may determine, based on a signal reported by the third electronic device, position space in which the third electronic device is currently located. In this way, when the user sends a voice instruction, an electronic device in position space in which the user is currently located is accurately controlled. User experience is improved.

In some embodiments, the method 600 may further include: The target electronic device sends a first request message to the third electronic device, where the request message is used to request to control the first electronic device. The target electronic device receives a first response message sent by the third electronic device, and determines, based on the first response message, whether to send a third instruction to the first electronic device.

In this embodiment of this application, when the third electronic device is moved from the first position space to the second position space, the target electronic device may send the request message to the third electronic device, to control the first electronic device in the first position space (for example, requesting to turn off a light), and determine, based on the response message sent by the user by using the third electronic device, whether to send the third instruction (for example, a light turn-off instruction) to the first electronic device. In the technical solution, when the user leaves position space, the target electronic device may inquire of the user whether an electronic device in the position space can be controlled. This can improve an intelligence level of the target electronic device while empowering the user with decision-making authority, resulting in good user experience.

In some embodiments, the method may further include: The target electronic device sends a third instruction to the first electronic device, where the third instruction is used to control the first electronic device.

In this embodiment of this application, after determining that the user moves from the first position space to the second position space or is close to the second position space, the target electronic device may directly send the third instruction to the first electronic device without inquiring with the user. This can improve an intelligence level of home appliances and improve user experience.

In some embodiments, when the first electronic device is moved from the first position space to third position space, the method 600 may further include: The target electronic device receives the third position space in which the first electronic device is located and a fifth signal measured by the first electronic device. The target electronic device receives a fourth instruction sent by the third electronic device and a sixth signal measured by the third electronic device. The target electronic device determines, based on a relationship between the sixth signal and a first signal and a relationship between the sixth signal and the fifth signal, fourth position space that the third electronic device is close to or located in. The target electronic device sends the fourth instruction to an electronic device in the fourth position space.

For example, for the technical solution, refer to related descriptions of steps 509 to 514 in FIG. 5B. For brevity, details are not described herein again.

In this embodiment of this application, the first electronic device (for example, a desk lamp) located in the first position space may be moved to the third position space. The target electronic device may receive and store the fifth signal measured by the first electronic device in the third position space, and receive the sixth signal measured by the third electronic device (for example, a mobile phone) and the fourth instruction sent by the third electronic device. After determining the fourth position space that the third electronic device is close to or located in, the target electronic device sends the fourth instruction (for example, turning on a light) to the electronic device located in the fourth position space. In the technical solution, information about the first electronic device can be updated. After a voice instruction of the user is received, position space that the user is close to or located in may be obtained through calculation, and the instruction is sent to an electronic device in the position space. This improves voice control efficiency and improves user experience.

FIG. 7 is a schematic flowchart of another voice control method according to an embodiment of this application. As shown in FIG. 7, the method 700 may be applied to a third electronic device. The method 700 may include step 710 to step 730.

710: The third electronic device sends a first instruction to a target electronic device in response to a voice operation of a user.

For example, the third electronic device may be a mobile phone of the user, and the user may send the first instruction to the target electronic device through voice. For example, the first instruction may be some control commands, for example, turning on a light or turning off a light.

720: The third electronic device measures a third signal based on the first instruction.

For example, the third electronic device may measure the third signal based on the first instruction. The third signal may be signal strength, power, or the like of the wireless network to which the third electronic device is connected, or the third signal may be a result obtained through calculation based on signal strength, a floor plan of the user, device distribution, or the like.

730: The third electronic device sends the third signal to the target electronic device, where
the third signal is used by the target electronic device to determine position space that the third electronic device is close to or located in, and the first instruction is used to control another electronic device in the position space.

It should be understood that for a manner in which the target electronic device determines, based on the third signal, the position space that the third electronic device is close to or located in, refer to the foregoing related descriptions. For brevity, details are not described herein again.

In this way, in an embodiment of this application, the third electronic device may send the instruction to the target electronic device in response to the voice operation of the user. The electronic device measures the third signal based on the instruction, and sends the third signal to the target electronic device, so that the target electronic device determines position space that the electronic device is close to or located in. In the technical solution, the electronic device sends the instruction and the measured signal to the target electronic device, to help the target electronic device determine the position space that the electronic device is close to or located in, and control another electronic device in the position space. This improves voice interaction efficiency and improves user experience.

In some embodiments, that the third electronic device measures a third signal based on the first instruction includes: the third electronic device periodically measures the third signal based on the first instruction.

In this embodiment of this application, the third electronic device periodically measures the third signal based on the first instruction, so that when a position of the third electronic device is updated, the signal measured by the third electronic device can be updated. This helps the target electronic device accurately determine the position space that the third electronic device is close to or located in.

In some embodiments, that the third electronic device sends the third signal to the target electronic device includes: The third electronic device periodically sends the third signal to the target electronic device.

In this embodiment of this application, the third electronic device may periodically send the measured third signal to the target electronic device. This helps the target electronic device accurately determine the position space that the third electronic device is close to or located in.

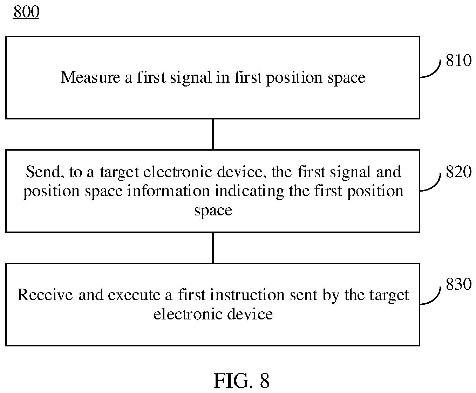

FIG. 8 is a schematic flowchart of another voice control method according to an embodiment of this application. As shown in FIG. 8, the method 800 may be applied to a first electronic device. The method 800 may include step 810 to step 830.

810: The first electronic device measures a first signal in first position space.

It should be understood that the first electronic device is located in the first position space, and measures the first signal in the first position space. For the first signal, refer to the foregoing descriptions.

820: The first electronic device sends, to a target electronic device, the first signal and position space information indicating the first position space.

That the first electronic device sends, to a target electronic device, the first signal and position space information indicating the first position space may be understood as that the first electronic device is registered with the target electronic device.

For example, the first electronic device is a desk lamp, the first position space is a primary bedroom, and the target electronic device is a cloud server. For a registration process of the first electronic device, refer to related descriptions in FIG. 3 or FIG. 4A to FIG. 4C. For brevity, details are not described herein again.

830: The first electronic device receives and executes a first instruction sent by the target electronic device.

For example, for this step, refer to related descriptions in steps 407 and 408. The server sends the first instruction to the first electronic device when determining that the third electronic device is located in the first position space. Correspondingly, the first electronic device receives the first instruction sent by the target electronic device, and executes the first instruction.

In this embodiment of this application, the first electronic device measures the first signal in the first position space, and sends the first signal and the first position space to the target electronic device. This helps the target electronic device send the first instruction to the first electronic device when determining that position space that the third electronic device is close to or located in is the first position space. This improves voice interaction efficiency and improves user experience.

In some embodiments, that the first electronic device sends, to a target electronic device, the first signal and position space information indicating the first position space includes: The first electronic device periodically sends, to the target electronic device, the first signal and/or the position space information indicating the first position space.

It should be understood that when the position space of the first electronic device does not change, the first electronic device may periodically measure the first signal, and periodically send the first signal to the target electronic device.

In the technical solution, the first electronic device may periodically send the first signal and/or the position space information to the target electronic device, so that when a position of the first electronic device is updated, the signal measured by the first electronic device can be updated. This helps the target electronic device accurately determine the position space that the third electronic device is close to or located in.

An embodiment of this application further provides an electronic device, including one or more processors and one or more memories. The one or more memories store one or more computer programs. The one or more computer programs include instructions. When the instructions are executed by the one or more processors, the voice control method according to any one of the foregoing possible implementations is performed.

An embodiment of this application further provides a server, including modules or units configured to implement the foregoing functions.

An embodiment of this application further provides a chip. The chip includes a processor and a communication interface. The communication interface is configured to receive a signal and transmit the signal to the processor. The processor processes the signal, so that the voice control method according to any one of the foregoing possible implementations is performed.

An embodiment further provides a computer readable storage medium. The computer readable storage medium stores computer instructions. When the computer instructions are run on a computer, the voice control method according to the foregoing embodiment is performed.

An embodiment further provides a computer program product. When the computer program product is run on a computer, the computer is enabled to perform the related steps to implement the voice control method in the foregoing embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments.

In the several embodiments provided in this application, it should be understood that the disclosed system, apparatus, and method may be implemented in other manners. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice control method, wherein the method is applied to a target electronic device, and the method comprises:
receiving, by the target electronic device, first signals measured by a plurality of electronic devices and information about position space in which the plurality of electronic devices are located, wherein the plurality of electronic devices have a same function;
receiving, by the target electronic device, a first instruction sent by a third electronic device in response to a voice operation of a user and a third signal measured by the third electronic device;
determining, by the target electronic device based on a relationship between the third signal and a first signal, first position space that the third electronic device is close to or located in; and
sending, by the target electronic device, the first instruction to a first electronic device in the first position space, wherein the first instruction is used to control the first electronic device.

2. The method according to claim 1, wherein the receiving, by the target electronic device, first signals measured by a plurality of electronic devices and position space in which the plurality of electronic devices are located comprises:
periodically receiving, by the target electronic device, the first signals measured by the plurality of electronic devices and/or the information about the position space in which the plurality of electronic devices are located.

3. The method according to claim 1 or 2, wherein when first target position space that the third electronic device is close to or located in changes, the method further comprises:
receiving, by the target electronic device, a second instruction sent by the third electronic device and a fourth signal measured by the third electronic device;
determining, by the target electronic device based on a relationship between the fourth signal and a first signal, second position space that the third electronic device is close to or located in; and
sending, by the target electronic device, the second instruction to a second electronic device in the second position space.

4. The method according to claim 3, wherein the method further comprises:
sending, by the target electronic device, a first request message to the third electronic device, wherein the request message is used to request to control the first electronic device; and
receiving, by the target electronic device, a first response message sent by the third electronic device, and determining, based on the first response message, whether to send a third instruction to the first electronic device.

5. The method according to claim 3, wherein the method further comprises:
sending, by the target electronic device, a third instruction to the first electronic device, wherein the third instruction is used to control the first electronic device.

6. The method according to claim 1 or 2, wherein when the first electronic device is moved from the first position space to third position space, the method further comprises:
receiving and storing, by the target electronic device, the third position space in which the first electronic device is located and a fifth signal measured by the first electronic device;
receiving, by the target electronic device, a fourth instruction sent by the third electronic device and a sixth signal measured by the third electronic device;
determining, by the target electronic device based on a relationship between the sixth signal and a first signal and a relationship between the sixth signal and the fifth signal, fourth position space that the third electronic device is close to or located in; and
sending, by the target electronic device, the fourth instruction to an electronic device in the fourth position space.

7. A voice control method, wherein the method is applied to a third electronic device, and the method comprises:
sending, by the third electronic device, a first instruction to a target electronic device in response to a voice operation of a user;
measuring, by the third electronic device, a third signal based on the first instruction; and
sending, by the third electronic device, the third signal to the target electronic device, wherein
the third signal is used by the target electronic device to determine position space that the third electronic device is close to or located in, and the first instruction is used to control another electronic device in the position space.

8. The method according to claim 7, wherein the measuring, by the third electronic device, a third signal based on the first instruction comprises:
periodically measuring, by the third electronic device, the third signal based on the first instruction.

9. The method according to claim 7 or 8, wherein the sending, by the third electronic device, the third signal to the target electronic device comprises:
periodically sending, by the third electronic device, the third signal to the target electronic device.

10. A voice control method, wherein the method is applied to a first electronic device, and comprises:
measuring, by the first electronic device, a first signal in first position space;
sending, by the first electronic device to a target electronic device, the first signal and position space information indicating the first position space; and
receiving and executing, by the first electronic device, a first instruction sent by the target electronic device.

11. The method according to claim 10, wherein the sending, by the first electronic device to a target electronic device, the first signal and position space information indicating the first position space comprises:
periodically sending, by the first electronic device to the target electronic device, the first signal and/or the position space information indicating the first position space.

12. An electronic device, comprising a module configured to implement the voice control method according to any one of claims 1 to 6, claims 7 to 9, or claims 10 and 11.

13. An electronic device, comprising one or more processors and one or more memories, wherein the one or more memories store one or more computer programs, the one or more computer programs comprise instructions, and when the instructions are executed by the one or more processors, the voice control method according to any one of claims 1 to 6 or claims 7 to 9 is performed.

14. An electronic device, comprising one or more processors and one or more memories, wherein the one or more memories store one or more computer programs, the one or more computer programs comprise instructions, and when the instructions are executed by the one or more processors, the voice control method according to claim 10 or 11 is performed.

15. A chip, wherein the chip comprises a processor and a communication interface, the communication interface is configured to receive a signal and transmit the signal to the processor, and the processor processes the signal, so that the voice control method according to any one of claims 1 to 6, claims 7 to 9, or claims 10 and 11 is performed.

16. A computer readable storage medium, wherein the computer readable storage medium stores computer instructions, and when the computer instructions are run on a computer, the voice control method according to any one of claims 1 to 6, claims 7 to 9, or claims 10 and 11 is performed.
